# EUROPEAN PATENT APPLICATION

(11) **EP 0 550 038 A1**
(43) Date of publication of application: **07.07.1993**
(21) Application number: 92122017.4
(22) Date of filing: 24.12.1992
(51) Int. Cl.: G03B 21/132, H04N 1/00

(54) **Overhead projector with video output**

(30) Priority: 30.12.1991 US 815814
(71) Applicant: MINNESOTA MINING AND MANUFACTURING COMPANY, St. Paul, Minnesota 55133-3427 (US)
(72) Inventor: Holec, Henry V., c/o Minnesota Mining and, St. Paul, Minnesota 55133-3427 (US); Madsen, David D., c/o Minnesota Mining and, St. Paul, Minnesota 55133-3427 (US); Vanderwerf, Dennis F., c/o Minnesota and, St.Paul, Minnesota 55133-3427 (US)
(74) Representative: Hilleringmann, Jochen, Dipl.-Ing.

(57) **Abstract**

An overhead projector (OHP) which provides simultaneous video output of the image which is being projected on the projection screen. The OHP has a projector head (14) which contains conventional optical components (lenses 40,42) for projecting an image from the stage of the OHP to the projection screen, and further contains a partially silvered mirror (38) which passes a portion of the image to a video camera (30) located within the projector head (14). The camera (30) converts the visual information into an electronic signal in standard video format, which may then be transmitted to local or remote auxiliary displays.

## Description

### Background of the Invention

### 1. Field of the Invention

The present invention generally relates to visual presentation systems, and more particularly to an overhead-type projector which projects an image on a screen and simultaneously captures the image electronically to allow display of the image on other video devices.

### 2. Description of the Prior Art

Overhead projectors (OHP's) are known in the art, and generally consist of a base having a stage area, a light source to illuminate the stage, and a projector head which houses mirrors and lenses designed to project any image placed on the stage area onto a display screen. OHP's may be either transmissive or reflective. In a transmissive OHP, the light source is under the stage area, i.e., opposite the side of the projector head. In a reflective OHP, the light source is above the stage area, typically near or even in the projector head, and the stage has a mirror-like surface to reflect the light back toward the head.

One important drawback in the use of OHP's lies in the fact that the image can only be projected onto a single projection screen; this consequently limits any presentation to a relatively small audience since it is difficult to view the screen from oblique angles, and those viewers farther from the screen will have great difficulty in observing any details in the projected image. Several solutions have been proposed to remedy this limitation, but each of these has additional disadvantages. For example, liquid crystal display (LCD) panels have recently been introduced for use with overhead projectors. These devices are controlled by computers (a personal computer or a "black box" containing a processor and memory storage devices). An exemplary LCD/OHP arrangement is shown in U.S. Patent No. 4,846,694. This type of system enhances the use of an OHP since the LCD controller may simultaneously direct the video output to other viewing devices, such as television monitors, which may be placed at several stations among the audience. The use of an LCD panel with an OHP, however, has plain disadvantages. Foremost among these is expense, since both the LCD panel and the computer controller are high-cost items. Also, an LCD panel can only project electronically stored images, which are typically prepared in advance of the presentation and stored in the controller's memory (hard disk or floppy diskette). This limitation prevents impromptu presentations as well as the ability of the presenter to modify or annotate prepared images. Although the user could temporarily remove the LCD panel from the OHP and place a conventional transparency on the OHP stage, images from that transparency cannot be directed to the other viewing devices. Those skilled in the art will also appreciate that overhead projection of LCD images requires a brighter light source, leading to other problems such as heat management. LCD panels do, however, allow remote viewing of the images since they may be transmitted along telephone lines, etc.

Alternative designs satisfy the desire for remote viewing but, in doing so, completely eliminate the screen projection provided by OHP's. For example, the apparatus depicted in U.S. Patent No. 5,027,219 is specifically designed to capture an graphic image and transmit it to remote sites. This apparatus looks very similar to an OHP, but it cannot be used to locally and directly project an image onto a screen, and thus forfeits the many advantages of OHP's.

The foregoing device might be used in conjunction with the invention disclosed in U.S. Patent No. 4,609,779. That invention provides an OHP for projecting an image which is remotely transmitted, but does not address the issue of how the transmitting end may view the image with an overhead projector and simultaneously transmit the image to the remote reproduction device.

One elementary technique which preserves the use of the OHP but also provides for simultaneous video output involves the use of a conventional video camera which is simply aimed at the projection screen. This arrangement, however, introduces several new problems. The primary difficulty is that the resolution of the captured image is relatively poor due to the diffuse reflection of the image off of the projection screen; this problem can easily be exaggerated by lighting conditions. This technique clearly requires more set up time, and may further require that the user have substantial photographic skills. Also, problems may develop with the orientation of the camera with respect to the screen. Finally, since the camera must be placed in front of the screen, it will inevitably block the view of someone in the audience. It would, therefore, be desirable and advantageous to devise an apparatus which retains the advantages of an OHP, but which easily provides a simultaneous, high quality video output of the projected image to allow viewing at other local display devices, as well as at remote locations.

### Summary of the Invention

The foregoing objective is achieved in an overhead projector having a image splitter located within the projector head, and further having a camera proximate the image splitter to receive the identical image that is being projected onto a screen. The image splitter is preferably a partially silvered mirror which allows a very small percentage of light to pass through. The camera includes a CCD (charge-coupled device) area array imaging chip, and a multi-element lens which is aligned to receive that portion of the image which passes through the image splitter. The optical components may be optimized to eliminate a secondary image of the projector lamp, or a diffuser may be used with the lamp. The output of the camera is preferably converted into a standard video format which can then be transmitted to both local and remote display units. A projector head adapter may be provided to modify an existing overhead projector to allow simultaneous video output. The invention may further be designed for use with other accessories, such as a microphone, a conventional video camera, or a video cassette recorder.

### Brief Description of the Drawings

The novel features and scope of the invention are set forth in the appended claims. The invention itself, however, will best be understood by reference to the accompanying drawings, wherein:
Figure 1 is a perspective view showing how a transmissive-type overhead projector constructed according to the present invention may provide a video signal to an auxiliary display unit;
Figures 2A-2C are side sectional views showing alternative arrangements of the optical components and camera in the projector head of the present invention;
Figure 3 is a side elevational view of the control panel used in the preferred embodiment of the present invention; and
Figure 4 is a perspective view illustrating the use of a projector head adaptor on a reflective-type overhead projector.

### Description of the Preferred Embodiment

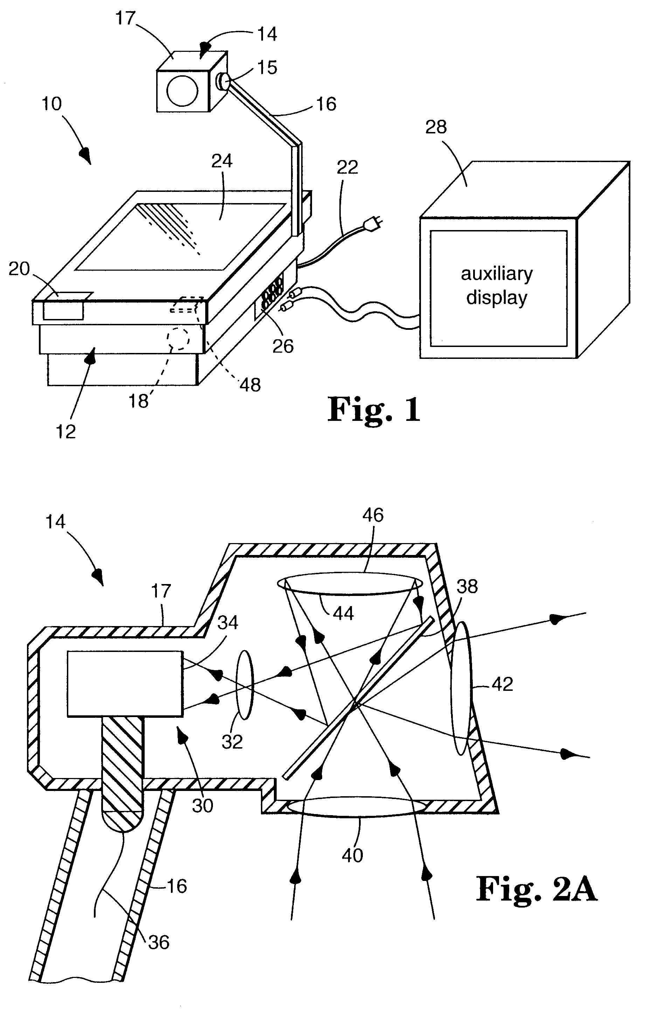

With reference now to the figures, and in particular with reference to Figure 1, there is depicted the overhead projector (OHP) **10** of the present invention. OHP **10** is generally comprised of base **12** and a head **14** supported by a post or support arm **16** having an adjustment knob **15** which raises or lowers head **14** or the optical components within head **14**. OHP **10** further includes several conventional elements such as a light source **18** located in base **12**, an on/off switch **20**, a cable **22** for connection to an external power supply, and a stage **24** formed by a transparent sheet of glass which is positioned between light source **18** and head **14**. The glass sheet forming stage **24** typically has a polymeric Fresnel condensing lens positioned immediately beneath it. OHP **10** also has a video control/access panel **26** which includes a plurality of connectors for transmitting signals to an auxiliary display **28**, as explained further below.

The present invention is directed to an OHP which has the ability to provide simultaneous video output of the identical image which is being projected through head **14** onto a projection surface or screen (not shown). In the preferred embodiments of the invention, this is achieved by locating a video camera within the housing **17** of projection head **14**. Referring now to figures 2A-2C, those figures illustrate alternative arrangements for the location of a camera **30** in head **14**. Camera **30** may be any camera capable of converting visual images into electrical signals, such as a vidicon tube, but the preferred camera is a solid state charge-coupled device (CCD) camera, due to its small size, low power consumption and longer service life. CCD camera **30** includes a multi-element lens schematically depicted at **32**, positioned at the forward end **34** of camera **30**, there being a silicon chip at end **34**, formed with an area array of photosensitive elements. The output of the silicon chip comprises an ordered sequence of discrete electronic image signals that collectively define a single frame of image information. Camera **30** also includes a clock and conventional conversion circuitry to convert this data sequence into standard video format, viz., National Television Standard Code (NTSC). The converted data stream is passed by wires **36**, which preferably are located within support arm **16**, to control electronics which are located in base **12**. The control electronics also provide the DC power needed for camera **30**, this power being delivered through wires **36**. In the prototype of OHP **10**, the camera **30** used was purchased from Amperex Electronic Co. (a division of North American Philips Corp.) under model no. 56571.

In Figure 2A, an image splitter **38** in the form of a partially silvered mirror is used to withdraw a portion of the projected image and direct it to camera **30**, and standard optical components are used to collect the image from stage **24** and project it towards the projection screen. A first projection or entry lens **40** located in an opening in housing **17** focuses light from stage **24** toward mirror **38**; the majority of the light is reflected and passed through a second projection or exit lens **42** located in another opening in housing **17**. Lenses **40** and **42** work together as a spaced doublet projection lens system to form the screen image. A portion of the light, however, passes through mirror **38** to reflecting lens **44**, which has a reflective coating **46** on its backside. Lens **44** focuses the light and directs it back toward mirror **38**, which further reflects it to camera lens **32**. In this embodiment, the lenses are preferably selected to form a secondary focus of the light inside camera lens **32**, which provides a more efficient transfer of light through this smaller lens. One minor problem with this arrangement, however, is that lens **32** (which may has a very high f number (f/12) and a great depth-of-field) will also capture the primary focus of the light at mirror **38**, creating a bright spot in the recorded image; this effect can be minimized by the use of a diffuser **48** (Figure 1) in front of light source **18**. An appropriate diffuser is available from Spindler & Hoyer of Milford, Massachusetts. Placement of camera **30** at the back end of head **14** in this manner does, nevertheless, minimize obstruction of the projection screen since head **14** has a more streamline shape. Assuming light source **18** provides about 2500 screen lumens, and that head **14** is about 35 cm from stage **24**, the following specifications are deemed preferably for the arrangement of Figure 2A: mirror **38**--1% light transmission; entry lens **40**--f number of about f/7.4 and focal length of about 640 mm; and exit lens **42**--f number of about f/6.7 and focal length of about 600 mm.

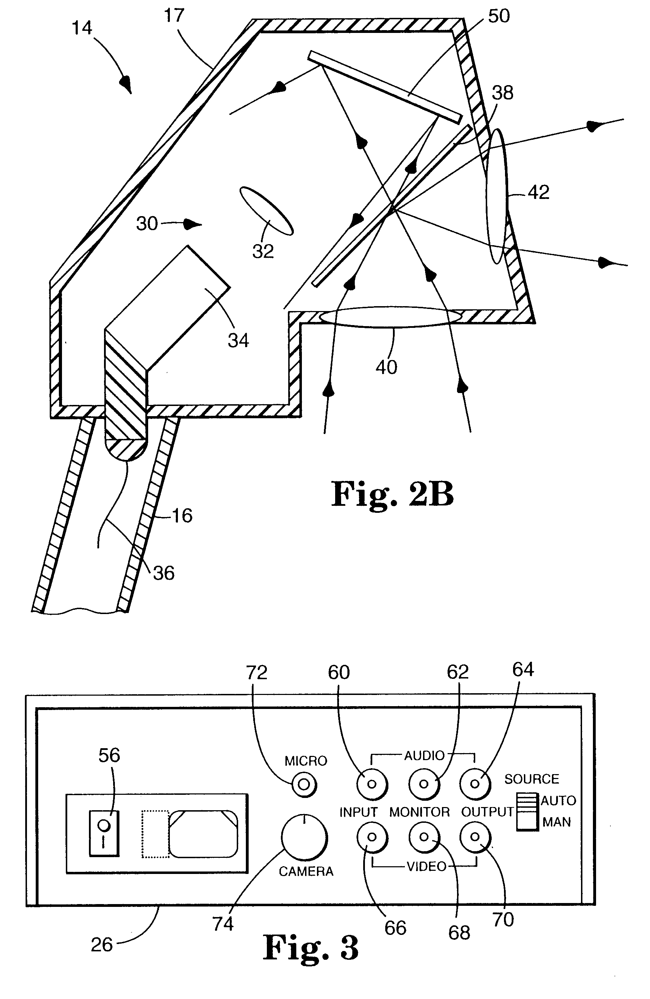

In the arrangement of Figure 2B, the same projection lenses **40** and **42** are used, but reflecting lens **44** has been replaced by a conventional planar mirror **50**. This arrangement is probably the least desirable since much of the light from stage **24** is not captured by camera lens **32**, and lens **32** still sees the primary focus of the light, thus requiring diffuser **48** in order to minimize spots in the recorded image. Also, in each of the illustrated embodiments, alignment of the camera may affect the color quality of the recorded image, i.e., misalignment may result in a blue or yellow background rather than pure white, but this may be compensated for with the camera color controls.

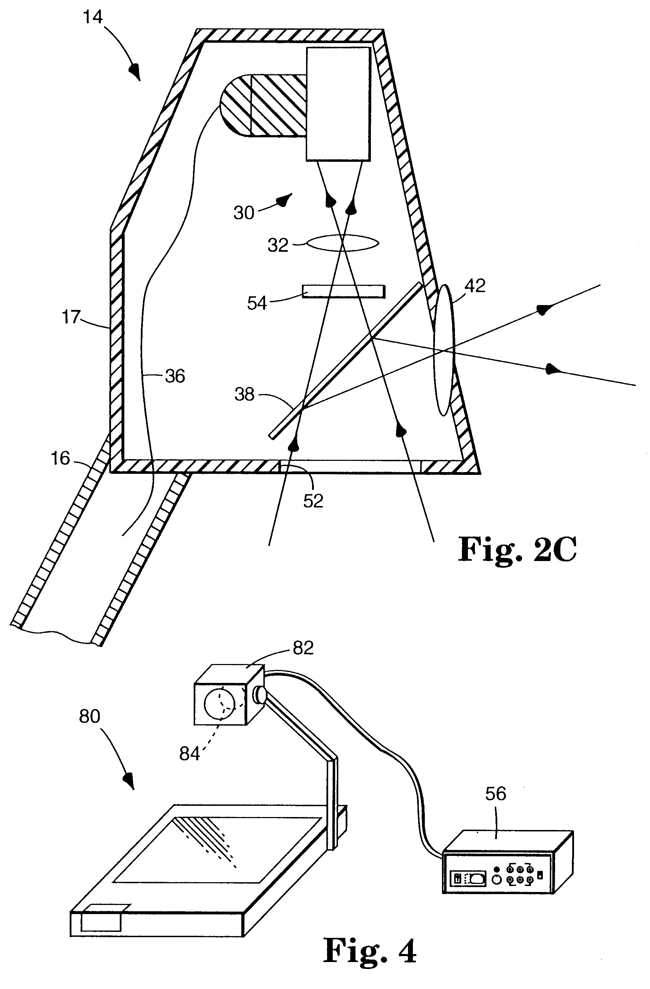

In Figure 2C, the entry lens has been eliminated, and there is further no need for a reflecting lens or second mirror since camera **30** is placed directly behind image splitter **38** in line with an opening **52** in the bottom of head **14**. This configuration is deemed most preferably since it allows the image of light source **18** to be formed within lens **32** as well as within lens **42**. The image converges at these points due to the focusing effect of the fresnel lens in stage **24**. Nevertheless, this arrangement had been found to create other small bright spots in the recorded image due to random pinhole imperfections in the coating on mirror **38**. This problem was eliminated by opening up the iris of camera lens **32** (e.g., to f/4), which threw the pinhole images out of focus nearly to the point of disappearing completely. The camera focusing ring may then be used to form a sharp image of the transparency lying on stage **24**. When so opening the camera iris, it is advisable to use an appropriate filter **54**, such as a neutral density filter obtainable from Melles Griot Co. of Irvine, California. When the camera iris is opened up to about f/4, filter **54** should provide about 13% transmission, and when the camera iris is opened up to about f/2, filter **54** should provide about 2% transmission. Filter **54** may be installed directly on camera lens **32**. In the arrangement of Figure 2C, exit lens **42** is preferably a 280/315 mm varifocal lens provided by Y.K. Optical Co. of Yokohama, Japan, and mirror **38** has a first surface reflectance of about 94%. The fresnel lens in stage **24** should have a focal length of about 180 mm.

The video output of OHP **10** is further explained with reference to Figure 3, which depicts control/access panel **26**. Panel **26** may be provided with a separate on/off switch **56** to enable the video output, in case OHP **10** is to be used without any auxiliary display **28**. Panel **26** may optionally have a receptacle **58** for a generic power cord, and a small door **59** may provide access to a fuse. Six RCA-type connectors **60** - **70** are provided in a 2x3 array: one row for audio signals and the second row for video signals, and three columns corresponding to input, monitor, and output, respectively. For example, connector **60** corresponds to the audio input, and connector **66** corresponds to the video input; these two connectors allow OHP **10** to transmit signals other than a contemporaneous presentation to auxiliary display **28**, e.g., prerecorded presentations which are played back on a video cassette recorder (VCR). A microphone jack **72** may be provided to add voice transmission to the visual presentation. Also, a jack **74** may be provided for an additional, external, camera (not shown). In this regard, the control electronics for OHP **10** may include a switching mechanism which causes the video output to change from camera 30 to the external camera when OHP **10** is turned off (or when a "black level" signal is detected from the output of camera **30**). For example, the external camera may be aimed at the presenter; as long as OHP **10** is turned on, auxiliary display **28** will show the same image as that projected by OHP **10** onto the projection screen, but when OHP **10** is turned off, those viewing auxiliary display **28** will immediately see the presenter. Finally, a source switch **76** having "AUTO" and "MAN" settings may be provided to allow the operator to select between automatic and manual video sourcing modes. In other words, when switch **76** is set to "AUTO," the output to display **28** will switch as discussed above between camera **30** and the external camera, but when switch **76** is set to "MAN," the video source is manually controlled by, e.g., another button **77** on panel **26**, or by remote control.

This novel combination of an overhead projector and video camera maintains all of the functionalities and advantages of a conventional overhead projector but additionally provides the new function of video output. The immediate audience will have the standard benefits associated with overhead projection, while other audiences will receive a quality video image without the need for external cameras or camera operators. Furthermore, auxiliary display **28** may be any device capable of creating an image based on electronic data. It may comprise a television monitor, television projector, computer CRT, etc., or a plurality of any of the foregoing; these devices may be set up locally or at a distant locations, which could receive the electronic image data by phone lines, radio signals, or satellite communications. Also, auxiliary display **28** could be a recording device, such as a VCR. Alternatively, display **28** could constitute a liquid crystal display (LCD) panel which may be used in conjunction with a conventional overhead projector to project the same image onto a second projection screen, either local or remote.

Those skilled in the art will appreciate that the present invention may also be used on reflective-type overhead projectors, as shown in Figure 4. Figure 4 also illustrates how the present invention may be adapted to conventional overhead projectors. In Figure 4, the projection head of a conventional reflective OHP **80** has been removed and replaced with a head **82** which is essentially identical to one of the heads depicted in Figures 2A-2C, except that the light source **84** has now been located within head **82**, directing light toward the reflective stage of OHP **80**. The camera within head **82** is electronically connected to a control box **86** which includes the same control/access panel and control electronics previously described.

Although the invention has been described with reference to specific embodiments, this description is not meant to be construed in a limiting sense. Various modifications of the disclosed embodiment, as well as alternative embodiments of the invention, will become apparent to persons skilled in the art upon reference to the description of the invention. For example, alternative optical arrangements may be provided which allow placement of the video camera in base **12** rather than head **14**, although this is considered less preferable. Also, the invention may be modified for opaque systems where light source **18** is extinguished, and an image on an opaque medium (such as paper) is placed on stage **24** and illuminated by other means. Additionally, camera **30** could be pivotally or otherwise mounted within head **14** in such a manner as to allow camera **30** to swing or move out of head **14** and be aimed at external objects. It is therefore contemplated that such modifications can be made without departing from the spirit or scope of the present invention as defined in the appended claims.

## Claims

1. A projection head comprising:
- a housing (17),
- optical means (40,42) located in said housing (17) for collecting an image and projecting the image,
- image splitting means (38) located in said housing (17) for withdrawing a portion of the image collected by said optical means (40,42) and
- camera means (30) located within said housing (17) for receiving the withdrawn portion of the image and converting it into electronic signals.

2. The projection head according to claim 1, characterized by neutral density filter means (54) interposed between said image splitting means (38) and said camera means (30).

3. The projection head according to claim 1 or 2, characterized by connector means (26,36) electronically connected to said camera means (30) for providing electronic video output to an auxiliary display (28).

4. The projection head according to any one of claims 1 to 3, characterized by means (46) for reflecting the withdrawn portion of the image towards said camera means (30).

5. A device for projecting an image onto a projection surface and for providing electronic signals corresponding to the projected image, comprising:
- a base (12) having a stage area (24),
- light means (18) for illuminating an image placed on said stage area (24),
- a projection head (14) having a housing (17) attached to said base (12), proximate said stage area (24),
- optical means (40,42) located in said projection head (14) for collecting light from the image and projecting the image onto the projection surface,
- image splitting means (38) located in said projection head (14) for withdrawing a portion of the image collected by said optical means (40,42) and
- camera means (30) located within said housing (17) for receiving the withdrawn portion of the image and converting it into electronic signals.

6. The device according to claim 5, characterized by connector means (26,36) electronically connected to said camera means (30) for providing electronic video output to an auxiliary display (28).

7. The device according to claim 5 or 6, characterized in that said camera means (30) comprises a solid state charge-coupled device which provides an electronic data sequence corresponding to image information, and a camera lens (32) mounted adjacent said charge-coupled device.

8. The device according to claim 6 or 7, characterized by
- switch means (20) for turning said light means (18) on or off,
- an external camera and
- control means (58) electrically connected to said external camera, said switch means (20), and said connector means (26,36) whereby, when said light means (18) is turned on, said electronic video output derives from said camera means (30) and, when said light means (18) is turned off, said electronic video output derives from said external camera.

9. The device according to claim 7 or 8, characterized in that the f number of said camera lens (32) is sufficiently low to render an image of any pinhole imperfections in said partially silvered mirror (38) out of focus at the surface of said charge-coupled device.

10. A presentation system providing simultaneous video output of an image which is being projected onto a projection surface, comprising:
- a base (12) having a stage (24) formed of a sheet of transparent material, said sheet further having a fresnel lens thereon,
- a light source (18) located in said base (12),
- a projection head (14) attached to said base (12), proximate said stage (24) and opposite said light source (18), said projection head (14) having an entry opening and an exit opening, and having a projection leans (42) in said exit opening,
- a partially silvered mirror (38) located in said projection head (14), having a generally flat surface which is oriented with respect to said entry and exit openings so as to reflect light entering through said entry opening toward said exit opening,
- a video camera (30) located within said projection head (14) and positioned to receive light images passing through said partially silvered mirror (38), said video camera (30) including a charge-coupled device, a lens (32) adjacent said charge-coupled device, and circuitry means for converting electronic signals from said charge-coupled device into National Television Standard Code format,
- an auxiliary display (28) and
- means (26,36) for transmitting output from said video camera (30) to said auxiliary display (28).

11. A presentation system providing simultaneous video output of an image which is being projected onto a projection surface, comprising:
- a base (12) having a stage (24) formed of a sheet of reflective material, said sheet further having a fresnel lens thereon,
- a projection head (14) attached to said base (12) proximate said stage (24), said projection head (14) having an entry opening and an exit opening, and having a projection lens (42) in said exit opening,
- a light source (18) located in said projection head (14) directing light toward said stage (24),
- a partially silvered mirror (28) located in said projection head (14), having a generally flat surface which is oriented with respect to said entry and exit openings so as to reflect light entering through said entry opening toward said exit opening,
- a video camera (30) located within said projection head (14) and positioned to receive light images passing through said partially silvered mirror (38), said video camera (30) including a charge-coupled device, a lens (32) adjacent said charge-coupled device, and circuitry means for converting electronic signals from said charge-coupled device into National Television Standard Code format,
- an auxiliary display (28) and
- means (26,36) for transmitting output from said video camera (30) to said auxiliary display (28).
